# EUROPEAN PATENT APPLICATION

(11) **EP 4 421 122 A1**
(43) Date of publication of application: **28.08.2024**
(21) Application number: 22883413.1
(22) Date of filing: 11.10.2022
(51) Int. Cl.: C08L 63/00, C08G 59/50, C08K 3/013, C08K 3/08, C08L 79/00, C09J 163/00, C09J 179/00

(54) **CURABLE RESIN COMPOSITION, CURED PRODUCT, AND ADHESIVE**

(30) Priority: 18.10.2021 JP 2021170233
(71) Applicant: ADEKA CORPORATION, Arakawa-ku Tokyo 116-8554 (JP)
(72) Inventor: OTA, Keisuke, Kuki-shi, Saitama 346-0101 (JP); OGAWA, Ryo, Kuki-shi, Saitama 346-0101 (JP); YAMADA, Shinsuke, Kuki-shi, Saitama 346-0101 (JP)
(74) Representative: Forstmeyer, Dietmar
(86) International application number: PCT/JP2022/037880
(87) International publication number: WO 2023/068109

(57) **Abstract**

An objective of the present invention is to provide a curable resin composition capable of offering a cured product having excellent electroconductivity and curability. The invention is a curable resin composition containing: (A) a cyanate ester resin; (B) an epoxy resin; (C) a latent curing agent including an amine-based latent curing agent having an active hydrogen and obtained by causing reaction between an amine compound and an epoxy compound; and (D) an electroconductive filler. Preferably, the latent curing agent, which is component (C), further contains a phenolic resin. Preferably, the electroconductive filler, which is component (D), is at least one type selected from silver particles and copper particles.

## Description

### Technical Field

The present invention relates to a curable resin composition containing a cyanate ester resin, an epoxy resin, a latent curing agent and an electroconductive filler.

### Background Art

Solder has conventionally been used as an electroconductive bonding agent for electronic components. In many cases, solder employs Sn-Pb alloys. Since solder contains lead, there have been concerns that solder may negatively affect the human body and the environment. Also, solder suffers from poor heat resistance. Therefore, electroconductive adhesives obtained by mixing an electroconductive filler to a polymer material have come to be employed as an alternative to solder. Electroconductive adhesives have a small impact on the environment, can be mounted at low temperatures, and can also maintain adhesive strength even at high temperatures, and are thus advantageous.

Many techniques have been proposed regarding mixing an electroconductive filler to a polymer. For example, Patent Literature 1 proposes mixing electroconductive particles, such as metal particles, to an adhesive composition containing a cyanate ester resin, an epoxy resin and a latent curing agent. The document discloses, as a preferable working example, a core-shell-type curing agent in which the core is an imidazole modified product. Unfortunately, this composition is not satisfactory in terms of electroconductivity and curability.

### Citation List

### Patent Literature

Patent Literature 1: JP H9-279121A

### Summary of Invention

### Technical Problem

An objective to be achieved by the present invention is to provide a curable resin composition capable of offering a cured product having excellent electroconductivity and curability.

### Solution to Problem

Inventors have found that, in a curable resin composition containing a cyanate ester resin, an epoxy resin, a latent curing agent and an electroconductive filler, when an amine-based latent curing agent having an active hydrogen is used as the latent curing agent, the curable resin composition can provide a cured product having excellent electroconductivity, thus accomplishing the present invention.

The present invention relates to a curable resin composition containing: (A) a cyanate ester resin; (B) an epoxy resin; (C) a latent curing agent including an amine-based latent curing agent having an active hydrogen and obtained by causing reaction between an amine compound and an epoxy compound; and (D) an electroconductive filler.

### Advantageous Effects of Invention

The present invention can provide a curable resin composition capable of offering a cured product having excellent electroconductivity and curability.

### Brief Description of Drawings

[Fig. 1] Fig. 1 is a SEM image of a cured product of Example 1.
[Fig. 2] Fig. 2 is a SEM image of a cured product of Comparative Example 3.
[Fig. 3] Fig. 3 is a SEM image of a cured product of Example 2.
[Fig. 4] Fig. 4 is a SEM image of a cured product of Comparative Example 1.
[Fig. 5] Fig. 5 is a SEM image of a cured product of Example 3.

### Description of Embodiments

A curable resin composition of the present invention will be described below.

Component (A) as used in the present invention is a cyanate ester resin, and any compound can be used without particular limitation regarding molecular structure, molecular weight, etc., as long as it is a compound having 2 or more cyanate groups.

Examples of the cyanate ester resin may include compounds represented by formula (1) below, compounds represented by formula (2) below, and polymers of these compounds.
[Chem. 1]

NC-O-A¹-Y¹-A²-O-CN (1)

(In the formula, Y¹ represents a divalent hydrocarbon group which is not substituted or is substituted by a fluorine atom or a cyanato group, or represents -O-, -S-, or a single bond; and A¹ and A² each independently represent a phenylene group which is not substituted or is substituted by 1 to 4 alkyl groups.) 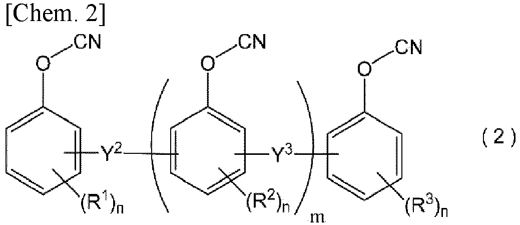 (In the formula, m represents an integer of 1 or greater; Y² and Y³ each independently represent -S- or a divalent hydrocarbon group which is not substituted or is substituted by a fluorine atom or a cyanato group; R¹, R², and R³ each independently represent an alkyl group having 1 to 4 carbon atoms; and n each independently represents an integer from 0 to 2.)

Examples of Y¹ in the formula (1) and Y² and Y³ in the formula (2) may include groups represented by formulas (Y-1) to (Y-9) below. 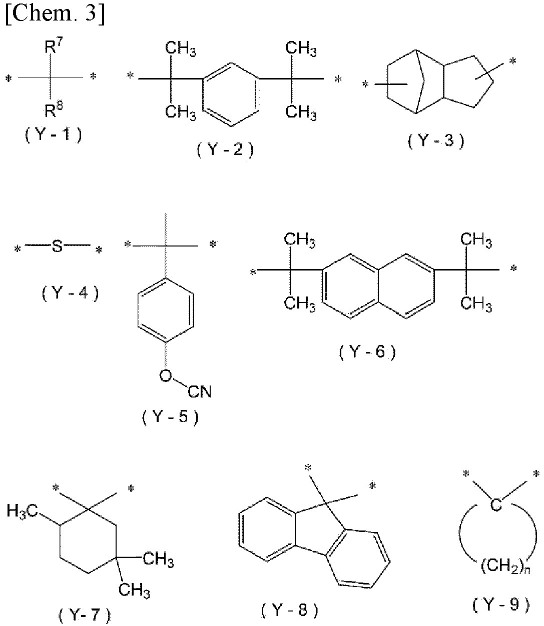 (In the formulas, n represents an integer from 4 to 12; R⁷ and R⁸ each independently represent a hydrogen atom or a methyl group which is not substituted or is substituted by a fluorine atom; and * represents a bonding site.)

Examples of commercially available products of the cyanate ester resin may include, but are not limited to: Cyanate LECy, PT-15, PT-30, PT-60, etc. from Lonza K.K.; L-10, XU366, XU371, XU378, etc. from Huntsman; and CA200, etc. from Mitsubishi Gas Chemical Company, Inc.

These cyanate ester resins may be used singly, or two or more types may be used in combination.

Among the cyanate ester resins, bisphenol-type, biphenyl-type, and novolac phenol-type cyanate ester resins are preferable, and bisphenol-type cyanate ester resins, such as bisphenol A-type, bisphenol E-type, and bisphenol F-type resins, are particularly preferable.

Component (B) as used in the present invention is an epoxy resin, and any type can be used without particular limitation regarding molecular structure, molecular weight, etc., as long as it has 2 or more epoxy groups in its molecule.

Examples of epoxy resins may include: polyglycidyl ether compounds of mononuclear polyhydric phenol compounds such as hydroquinone, resorcin, pyrocatechol, phloroglucinol, etc.; polyglycidyl ether compounds of polynuclear polyhydric phenol compounds such as dihydroxynaphthalene, biphenol, methylene bisphenol (bisphenol F), methylene bis(o-cresol), ethylidene bisphenol, isopropylidene bisphenol (bisphenol A), isopropylidene bis(o-cresol), tetrabromobisphenol A, 1,3-bis(4-hydroxycumylbenzene), 1,4-bis(4-hydroxycumylbenzene), 1,1,3-tris(4-hydroxyphenyl)butane, 1, 1,2,2-tetra(4-hydroxyphenyl)ethane, thiobisphenol, sulfobisphenol, oxybisphenol, phenol novolac, ortho-cresol novolac, ethylphenol novolac, butylphenol novolac, octylphenol novolac, resorcin novolac, terpene phenol, etc.; polyglycidyl ether compounds of polyol compounds such as ethylene glycol, propylene glycol, butylene glycol, hexanediol, polyethylene glycol, polypropylene glycol, thioglycol, dicyclopentadiene dimethanol, 2,2-bis(4-hydroxycyclohexyl)propane (hydrogenated bisphenol A), glycerin, trimethylolpropane, pentaerythritol, sorbitol, bisphenol A-alkylene oxide adduct, etc.; glycidyl ester compounds of aliphatic, aromatic or alicyclic polybasic acids such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, endomethylene tetrahydrophthalic acid, etc., and homopolymers or copolymers of glycidyl methacrylate; epoxy compounds having a glycidylamino group, such as N,N-diglycidylaniline, bis(4-(N-methyl-N-glycidylamino)phenyl)methane, diglycidyl ortho-toluidine, N,N-bis(2,3-epoxy propyl)-4-(2,3-epoxy propoxy)-2-methylaniline, N,N-bis(2,3-epoxy propyl)-4-(2,3-epoxy propoxy)aniline, N,N,N',N'-tetra(2,3-epoxy propyl)-4,4-diaminodiphenylmethane, etc.; epoxidized products of cyclic olefin compounds, such as vinylcyclohexene diepoxide, cyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, bis(3,4-epoxy-6-methylcyclohexylmethyl) adipate, etc.; epoxidized conjugated diene polymers, such as epoxidized polybutadiene, epoxidized styrene-butadiene copolymer, etc.; and heterocyclic compounds, such as triglycidyl isocyanurate, etc. These epoxy resins may be internally crosslinked by isocyanate-terminal prepolymers, or may be increased in molecular weight by using polyvalent active hydrogen compounds (polyhydric phenols, polyamines, carbonyl group-containing compounds, polyphosphoric esters, etc.).

The epoxy resin may be used singly, or two or more types may be used in combination.

Among the aforementioned epoxy resins, polyglycidyl ether compounds of polynuclear polyhydric phenol compounds are preferable.

The content of the epoxy resin, which is the component (B), is preferably from 20 to 200 parts by mass, more preferably from 30 to 150 parts by mass, with respect to 100 parts by mass of the cyanate ester resin, which is the component (A), because a cured product having excellent physical properties can be obtained.

Component (C) as used in the present invention is a latent curing agent which includes an amine-based latent curing agent having an active hydrogen and obtained by causing reaction between an amine compound and an epoxy compound.

The amine compound is an amine compound having at least one active hydrogen, and examples may include: alkylene diamines, such as ethylenediamine, 1,2-diaminopropane, 1,3-diaminopropane, 1,3-diaminobutane, 1,4-diaminobutane, hexamethylenediamine, etc.; polyalkylpolyamines, such as diethylenetriamine, triethylenetriamine, tetraethylenepentamine, etc.; polyoxyalkylene polyamines, such as polyoxypropylene diamine, polyoxypropylene triamine, etc.; alicyclic polyamines, such as 1,4-diaminocyclohexane, 1,3-diaminocyclohexane, 1,3-diaminomethylcyclohexane, 1,2-diaminocyclohexane, 1,4-diamino-3,6-diethylcyclohexane, 4,4'-diaminodicyclohexylmethane, 1,3-bis(aminomethyl)cyclohexane, 1,4-bis(aminomethyl)cyclohexane, 4,4'-diaminodicyclohexylpropane, bis(4-aminocyclohexyl)sulfone, 4,4'-diaminodicyclohexyl ether, 2,2'-dimethyl-4,4'-diaminodicyclohexylmethane, isophorone diamine, norbornene diamine, etc.; aromatic polyamines, such as m-xylylenediamine, diaminodiphenylmethane, diaminodiphenylsulfone, diethyltoluenediamine, 1-methyl-3,5-diethyl-2,4-diaminobenzene, 1-methyl-3,5-diethyl-2,6-diaminobenzene, 1,3,5-triethyl-2,6-diaminobenzene, 3,3'-diethyl-4,4'-diaminodiphenylmethane, 3,5,3',5'-tetramethyl-4,4'-diaminodiphenylmethane, etc.; guanamines, such as benzoguanamine, acetoguanamine, etc.; dihydrazides, such as oxalic acid dihydrazide, malonic acid dihydrazide, succinic acid dihydrazide, glutaric acid dihydrazide, adipic acid dihydrazide, suberic acid dihydrazide, azelaic acid dihydrazide, sebacic acid dihydrazide, phthalic acid dihydrazide, etc.; N,N-dimethylaminoethylamine, N,N-diethylaminoethylamine, N,N-diisopropylaminoethylamine, N,N-diallylaminoethylamine, N,N-benzylmethylaminoethylamine, N,N-dibenzylaminoethylamine, N,N-cyclohexylmethylaminoethylamine, N,N-dicyclohexylaminoethylamine, N-(2-aminoethyl)pyrrolidine, N-(2-aminoethyl)piperidine, N-(2-aminoethyl)morpholine, N-(2-aminoethyl)piperazine, N-(2-aminoethyl)-N'-methylpiperazine, N,N-dimethylaminopropylamine, N,N-diethylaminopropylamine, N,N-diisopropylaminopropylamine, N,N-diallylaminopropylamine, N,N-benzylmethylaminopropylamine, N,N-dibenzylaminopropylamine, N,N-cyclohexylmethylaminopropylamine, N,N-dicyclohexylaminopropylamine, N-(3-aminopropyl)pyrrolidine, N-(3 -aminopropyl)piperi dine, N-(3-aminopropyl)morpholine, N-(3-aminopropyl)piperazine, N-(3-aminopropyl)-N'-methylpiperidine, 4-(N,N-dimethylamino)benzylamine, 4-(N,N-diethylamino)benzylamine, 4-(N,N-diisopropylamino)benzylamine, N,N-dimethylisophoronediamine, N,N-dimethylbisaminocyclohexane, N,N,N'-trimethylethylenediamine, N'-ethyl-N,N-dimethylethylenediamine, N,N,N'-trimethylethylenediamine, N'-ethyl-N,N-dimethylpropanediamine, N'-ethyl-N,N-dibenzylaminopropylamine; N,N-(bisaminopropyl)-N-methylamine, N,N-bisaminopropylethylamine, N,N-bisaminopropylpropylamine, N,N-bisaminopropylbutylamine, N,N-bisaminopropylpentylamine, N,N-bisaminopropylhexylamine, N,N-bisaminopropyl-2-ethylhexylamine, N,N-bisaminopropylcyclohexylamine, N,N-bisaminopropylbenzylamine, N,N-bisaminopropylallylamine, bis[3-(N,N-dimethylaminopropyl)]amine, bis[3-(N,N-diethylaminopropyl)]amine, bis[3-(N,N-diisopropylaminopropyl)]amine, bis[3-(N,N-dibutylaminopropyl)]amine, etc.

From the viewpoint of balancing curability and storage stability, it is preferable that the active hydrogen equivalent of the amine compound is from 10 to 300, more preferably from 15 to 150.

Among the aforementioned amine compounds, it is preferable to use at least one type selected from aliphatic amines and alicyclic amines from the viewpoint of excellent curability. More specifically, particularly preferable examples may include: alkylene diamines, such as ethylenediamine, 1,2-propylenediamine, etc.; polyalkylene polyamines, such as diethylenetriamine, triethylenetetramine, etc.; polyoxyalkylene polyamines, such as dioxypropylene diamine, polyoxypropylene polyamine, polyoxyethylene polyamine, etc.; alicyclic amines, such as isophorone diamine, 1,3-diaminomethylcyclohexane, N-(2-aminoethyl)piperazine, etc. Particularly, 1,2-propylenediamine, dioxypropylene diamine, and N-(2-aminoethyl)piperazine are preferable.

Examples of the epoxy compound may include: polyglycidyl ether compounds of mononuclear polyhydric phenol compounds, such as hydroquinone, resorcin, pyrocatechol, phloroglucinol, etc.; polyglycidyl ether compounds of polynuclear polyhydric phenol compounds, such as dihydroxynaphthalene, biphenol, methylene bisphenol (bisphenol F), methylene bis(o-cresol), ethylidene bisphenol, isopropylidene bisphenol (bisphenol A), isopropylidene bis(o-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfonylbisphenol, oxybisphenol, phenol novolac, o-cresol novolac, ethylphenol novolac, butylphenol novolac, octylphenol novolac, resorcin novolac, terpene phenol, etc.; polyglycidyl ethers of polyols, such as ethylene glycol, propylene glycol, butylene glycol, hexanediol, polyglycol, thiodiglycol, glycerin, trimethylol propane, pentaerythritol, sorbitol, bisphenol A-alkylene oxide adduct, etc.; glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, endomethylene tetrahydrophthalic acid, etc.; homopolymers or copolymers of glycidyl methacrylate; epoxy compounds containing a glycidylamino group, such as N,N-diglycidylaniline, bis(4-(N-methyl-N-glycidylamino)phenyl)methane, diglycidyl o-toluidine, etc.; epoxidized products of cyclic olefin compounds, such as vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, bis(3,4-epoxy-6-methylcyclohexylmethyl)adipate, etc.; epoxidized conjugated diene polymers, such as epoxidized polybutadiene, epoxidized styrene-butadiene copolymer, etc.; and heterocyclic compounds, such as triglycidyl isocyanurate, etc.

The epoxy compounds may be glycidyl-type epoxy compounds, or cycloalkene oxide-type epoxy compounds typified by epoxidized products of cyclic olefin compounds. In cases where the epoxy compound is of a glycidyl-type, it may be an aromatic epoxy compound having an aromatic ring or an aliphatic epoxy compound not having an aromatic ring. From the viewpoint of reactivity, it is preferable to use a glycidyl-type epoxy compound, and from the viewpoint of heat resistance, it is more preferable to use a glycidyl-type aromatic epoxy compound.

The amine-based latent curing agent is obtained by causing reaction between an amine compound and an epoxy compound, and is preferably obtained by causing reaction therebetween such that the amount of the epoxy groups in the epoxy compound is from 0.1 to 0.9 equivalents, particularly preferably from 0.2 to 0.8 equivalents, with respect to 1 equivalent of active hydrogen in the amine compound.

It is preferable to adjust the amount of the epoxy compound with respect to the amine compound to be greater than or equal to the aforementioned lower limit value, because the storage stability of the curable resin composition can be improved, and it is also preferable to adjust the amount to be less than or equal to the aforementioned upper limit value because curability can be obtained reliably.

The method for producing the amine-based latent curing agent is not particularly limited. An example of a method is to cause reaction at temperatures ranging from atmospheric temperature to 140°C under heating for 1 to 10 hours, using a solvent as necessary. In cases of using a solvent, the solvent can be removed by heating under atmospheric pressure or reduced pressure after termination of the reaction.

Examples of the solvent that may be used for producing the aforementioned amine-based latent curing agent may include: ketones, such as methyl ethyl ketone, methyl amyl ketone, diethyl ketone, acetone, methyl isopropyl ketone, propylene glycol monomethyl ether acetate, cyclohexane, etc.; ethers, such as tetrahydrofuran, 1,2-dimethoxyethane, 1,2-diethoxyethane, propylene glycol monomethyl ether, etc.; esters, such as ethyl acetate, n-butyl acetate, etc.; aromatic hydrocarbons, such as benzene, toluene, xylene, etc.; halogenated aliphatic hydrocarbons, such as carbon tetrachloride, chloroform, trichloroethylene, methylene chloride, etc.; and halogenated aromatic hydrocarbons, such as chlorobenzene, etc.

It is preferable that the latent curing agent, which is the component (C) as used in the present invention, further includes a phenolic resin because stability can be improved.

Examples of the phenolic resin may include polyhydric phenol compounds, such as phenol novolac resin, cresol novolac resin, aromatic hydrocarbon formaldehyde resin-modified phenolic resin, dicyclopentadiene-phenol addition-type resin, phenol aralkyl resin (Xylok resin), naphthol aralkyl resin, trisphenylol methane resin, tetraphenylol ethane resin, naphthol novolac resin, naphthol-phenol co-condensed novolac resin, naphthol-cresol co-condensed novolac resin, biphenyl-modified phenolic resin (a polyhydric phenol compound wherein phenol nuclei are linked by a bismethylene group), biphenyl-modified naphthol resin (a polyhydric naphthol compound wherein phenol nuclei are linked by a bismethylene group), aminotriazine-modified phenolic resin (a compound containing a phenol skeleton, a triazine ring and a primary amino group in its molecular structure), and alkoxy group-containing aromatic ring-modified novolac resin (a polyhydric phenol compound wherein a phenol nucleus and an alkoxy group-containing aromatic ring are linked by formaldehyde).

In the present invention, from the viewpoint of obtaining an excellent balance between the storage stability and curability of the curable resin composition, it is preferable that the phenolic resin to be used has a softening point of from 50 to 200°C.

The usage amount of the phenolic resin is preferably from 10 to 100 parts by mass, particularly preferably from 20 to 60 parts by mass, with respect to 100 parts by mass of the aforementioned amine-based latent curing agent. This range is preferable, because sufficient curability can be achieved when the amount is 10 parts by mass or greater, and deterioration in physical properties of the cured product can be avoided more reliably when the amount is 100 parts by mass or less.

In cases where the latent curing agent, which is the component (C) as used in the present invention, is a solid, it may be used by being pulverized with a pulverizer such as a jet mill.

The latent curing agent may include other latent curing agents other than the aforementioned amine-based latent curing agent and phenolic resin. Examples of other latent curing agents may include: dibasic acid dihydrazides, such as oxalic acid dihydrazide, malonic acid dihydrazide, succinic acid dihydrazide, glutaric acid dihydrazide, adipic acid dihydrazide, suberic acid dihydrazide, azelaic acid dihydrazide, sebacic acid dihydrazide, phthalic acid dihydrazide, etc.; guanidine compounds, such as dicyandiamide, benzoguanamine, acetoguanamine, etc.; melamine; and modified amines, such as dehydration condensates of amines and carboxylic acids, adducts of amines and isocyanates, Michael adducts of amines, Mannich reaction products of amines, condensates of amines and urea, and condensates of amines and ketones. Note, however, that in cases of using the above, it is preferable that the content does not exceed 50 mass% in the latent curing agent because electroconductivity may deteriorate.

The content of the latent curing agent, which is the component (C), is not particularly limited, but for reasons such as reactivity and one-component stability, it is preferable that the content is from 1 to 70 parts by mass, more preferably from 3 to 60 parts by mass, with respect to 100 parts by mass, in total, of the cyanate ester resin, which is the component (A), and the epoxy resin, which is the component (B).

Component (D) as used in the present invention is an electroconductive filler, and any type will suffice if it has electroconductivity, and examples may include: metal particles, such as gold, silver, nickel, copper, solder, etc.; metal oxides, such as tin oxide, indium oxide, zinc oxide, etc.; carbons, such as carbon black, graphite, carbon nanotubes, carbon fibers, etc. Examples may also include substances in which a non-metal material, such as glass, ceramics, plastic, etc., is covered by the aforementioned electroconductive layer. From the viewpoint of easy penetration into gaps and excellent meltability, as well as a sufficient effect of imparting electroconductivity, it is preferable that the average particle size thereof is from 0.1 to 50 µm, particularly preferably from 0.5 to 30 µm. The average particle size can be measured with a laser diffraction particle size distribution measurement device.

The shape of the particles may be spherical, flat, platy, flaky, filmy, rod-like, dendritic, fibrous, acicular, scaly, angular, polyhedric, etc., and is not particularly limited.

From the viewpoint of a sufficient effect of imparting electroconductivity, it is preferable that the content of the electroconductive filler, which is the component (D), is from 30 to 90 mass%, particularly preferably from 50 to 80 mass%, in the curable resin composition.

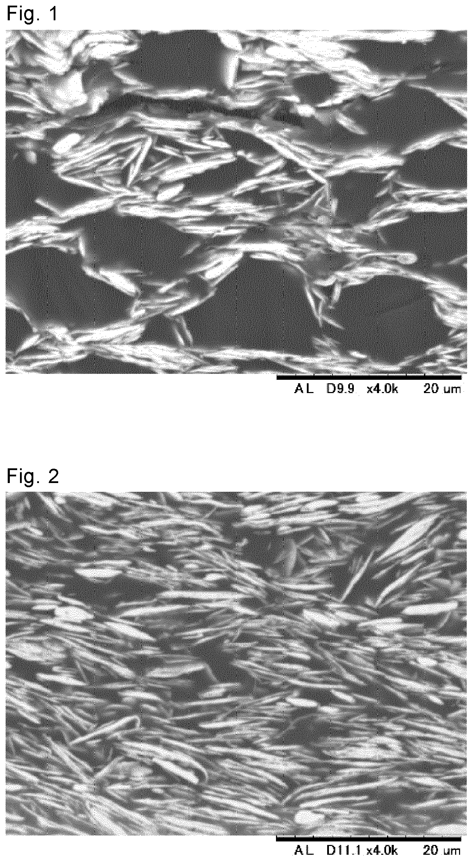

It should be noted that, in a system wherein an electroconductive filler and a latent curing agent, which has an active hydrogen and is obtained by causing reaction between an amine compound and an epoxy compound, are blended with an epoxy resin and a cyanate ester resin, localization of the electroconductive filler occurs within the cured product (see the SEM images of Figs. 1 to 4), and this is thought to form and increase electroconductive paths and thereby improve electroconductivity. Localization is not observed in cases where no cyanate ester resin is used and in cases where an amine-based latent curing agent having no active hydrogen is used.

In the present invention, it is possible to use, in combination, known curing accelerators as necessary. Concrete examples of curing accelerators may include: phosphines, such as triphenylphosphine, etc.; phosphonium salts, such as tetraphenylphosphonium bromide, etc.; imidazoles, such as 2-methylimidazole, 2-phenylimidazole, 2-ethyl-4-methylimidazole, 2-undecylimidazole, 1-cyanoethyl-2-methylimidazole, etc.; imidazole salts between the aforementioned imidazoles and trimellitic acid, isocyanuric acid, boron, etc.; amines, such as benzyldimethylamine, 2,4,6-tris(dimethylaminomethyl)phenol, etc.; quaternary ammonium salts, such as trimethylammonium chloride, etc.; ureas, such as 3-(p-chlorophenyl)-1,1-dimethylurea, 3-(3,4-dichlorophenyl)-1,1-dimethylurea, 3-phenyl-1,1-dimethylurea, isophorone diisocyanate-dimethylurea, tolylene diisocyanate-dimethylurea, etc.; and complex compounds between boron trifluoride and amines, ether compounds, etc. The curing accelerator may be used singly, or two or more types may be used in combination. The content of the curing accelerator is not particularly limited, and may be set as appropriate depending on the use etc.

The curable resin composition of the present invention may contain other types of additives, as necessary. Examples of the additives may include: phenol compounds, such as biphenol, etc.; reactive diluents, such as p-tert-butyl glycidyl ether, n-butyl glycidyl ether, C12-C13 alcohol glycidyl ether, etc.; non-reactive diluents (plasticizers), such as dioctyl phthalate, dibutyl phthalate, benzyl alcohol, coal tar, etc.; silica, such as fused silica, crystalline silica, etc.; fillers, such as powders or conglobed beads of aluminum oxide (alumina), magnesium oxide, zinc oxide, magnesium hydroxide, aluminum hydroxide, aluminum nitride, silicon nitride, boron nitride, zinc molybdate, calcium carbonate, silicon carbonate, calcium silicate, potassium titanate, beryllia, zirconia, zircon, forsterite, steatite, spinel, mullite, titania, etc., and fibers, such as glass fiber, pulp fiber, synthetic fiber, ceramic fiber, etc.; reinforcing materials, such as glass cloth, aramid cloth, carbon fiber, etc.; pigments; silane coupling agents, such as γ-aminopropyltriethoxysilane, N-β-(aminoethyl)-γ-aminopropyltriethoxysilane, N-β-(aminoethyl)-N'-β-(aminoethyl)-γ-aminopropyltriethoxysilane, γ-anilinopropyltriethoxysilane, γ-glycidoxypropyltriethoxysilane, β-(3,4-epoxycyclohexyl)ethyltriethoxysilane, vinyltriethoxysilane, N-β-(N-vinylbenzylaminoethyl)-γ-aminopropyltriethoxysilane, γ-methacryloxypropyltrimethoxysilane, γ-chloropropyltrimethoxysilane, γ-mercaptopropyltrimethoxysilane, etc.; lubricants, such as candelilla wax, carnauba wax, Japan wax, Chinese wax, beeswax, lanolin, spermaceti wax, montan wax, petroleum wax, aliphatic wax, aliphatic ester, aliphatic ether, aromatic ester, aromatic ether, etc.; thickeners; thixotropic agents; antioxidants; light stabilizers; UV absorbers; antifoaming agents; rust preventives; and commonly used additives, such as colloidal silica, colloidal alumina, etc.

Further, an adhesive resin, such as xylene resin, petroleum resin, etc., may be used in combination.

To cure the curable resin composition of the present invention, it is preferable to perform heating, for example, at a temperature from 80 to 200°C from the viewpoint of achieving the physical properties as a cured product.

The curable resin composition of the present invention can be used as an adhesive for a wide range of applications. Particularly, since the cured product has excellent electroconductivity, it can suitably be used for electronic applications, such as semiconductor sealing or electronic component adhesives.

### Examples

Next, the present invention will be described in further detail below according to Examples and Comparative Examples. The invention, however, is not to be limited to the following Examples.

### {Production Example 1}

### Synthesis of Latent Curing Agent EH-1:

A flask was charged with 201 g of 1,2-diaminopropane and heated to 60°C. Then, 580 g of Adeka Resin EP-4100E (product from Adeka Corporation; bisphenol A-type epoxy resin; epoxy equivalent: 190) was gradually added (epoxy equivalent of Adeka Resin EP-4100E with respect to 1 mol of 1,2-diaminopropane: 1.12) such that the temperature within the system was kept within a range from 100 to 110°C. After all the Adeka Resin EP-4100E was added, the temperature of the reaction system was raised to 140°C to cause reaction for 1.5 hours, to obtain an amine-based latent curing agent having an active hydrogen. Next, to 100 g of the obtained amine-based latent curing agent having an active hydrogen, 30 g of MP-800K (from Asahi Yukizai Corporation; phenolic resin; softening point: 100°C) was added, and after the solvent and unreacted material were removed by decompression deaeration for 1 hour under conditions of 180 to 190°C and 30 to 40 torr, the product was pulverized with a jet mill, to obtain a latent curing agent (EH-1).

### {Production Example 2}

### Synthesis of Latent Curing Agent EH-2:

A flask was charged with 352 g of isophorone diamine and heated to 60°C. Then, 580 g of Adeka Resin EP-4100E (product from Adeka Corporation; bisphenol A-type epoxy resin; epoxy equivalent: 190) was gradually added (epoxy equivalent of Adeka Resin EP-4100E with respect to 1 mol of isophorone diamine: 1.47) such that the temperature within the system was kept within a range from 100 to 110°C. After all the Adeka Resin EP-4100E was added, the temperature of the reaction system was raised to 140°C to cause reaction for 1.5 hours, to obtain an amine-based latent curing agent having an active hydrogen. Next, to 100 g of the obtained amine-based latent curing agent having an active hydrogen, 30 g of MP-800K (from Asahi Yukizai Corporation; phenolic resin; softening point: 100°C) was added, and after the solvent and unreacted material were removed by decompression deaeration for 1 hour under conditions of 180 to 190°C and 30 to 40 torr, the product was pulverized with a jet mill, to obtain a latent curing agent (EH-2).

### {Production Example 3}

### Synthesis of Latent Curing Agent EH-3:

A flask was charged with 190 g of 2-ethyl-4-methylimidazole and heated to 60°C. Then, 409 g of Adeka Resin EP-4100E (product from Adeka Corporation; bisphenol A-type epoxy resin; epoxy equivalent: 190) was gradually added (the ratio of the active hydrogen equivalent of 2-ethyl-4-methylimidazole to the epoxy equivalent of Adeka Resin EP-4100E was 1:1.24) such that the temperature within the system was kept within a range from 100 to 110°C. After all the Adeka Resin EP-4100E was added, the temperature of the reaction system was raised to 140°C to cause reaction for 1.5 hours, to obtain a modified imidazole having no active hydrogen. Next, to 100 g of the obtained modified imidazole, 30 g of MP-800K (from Asahi Yukizai Corporation; phenolic resin; softening point: 100°C) was added, and after the solvent and unreacted material were removed by decompression deaeration for 1 hour under conditions of 180 to 190°C and 30 to 40 torr, the product was pulverized with a jet mill, to obtain a latent curing agent (EH-3).

### {Examples 1 to 4 and Comparative Examples 1 to 3}

Respective resin compositions were produced by mixing the various components according to the compositional makeup shown in Table 1 below, and the following tests were conducted. The evaluation results are shown in Table 1 below. The numerical values in the compositional makeup shown in Table 1 indicate parts by mass.

**[Table 1]**

| | | | Example | | | | Comparative Example | | |
|---|---|---|---|---|---|---|---|---|---|
| | | | 1 | 2 | 3 | 4 | 1 | 2 | 3 |
| Curable resin composition | Epoxy resin | EP-1 | 70 | 70 | 70 | 70 | 160 | 70 | 70 |
| | | EP-2 | 30 | 30 | 30 | 30 | 40 | 30 | 30 |
| | Cyanate ester resin | Cy-1 | 100 | 100 | 100 | 100 | - | 100 | 100 |
| | Curing agent | EH-1 | 30 | - | - | 30 | 25 | - | - |
| | | EH-2 | - | 27 | 27 | - | - | - | - |
| | | EH-3 | - | - | - | - | - | 20 | - |
| | | EH-4 | 10 | 10 | 10 | 10 | 10 | - | 10 |
| | Silane coupling agent | KBM-403 | 5 | 5 | 5 | 5 | 5 | 5 | 5 |
| | Electroconductive filler | Ag-1 | 490 | 150 | - | - | 490 | 150 | 490 |
| | | Ag-2 | - | 450 | - | - | - | 450 | - |
| | | Ag-3 | - | - | 145 | - | | | |
| | | Ag/Cu-1 | - | - | - | 490 | - | - | - |
| Evaluation | Electroconductivity | | A | A | A | A | B | B | B |
| | Gelation Time | | A | A | A | A | B | B | B |

EP-1: EP-4901E from Adeka Corporation (bisphenol F-type epoxy resin)
EP-2: ED-509S from Adeka Corporation (4-tert-butylphenylglycidyl ether)
CY-1: LECy from Lonza K.K. (bisphenol-type cyanate ester resin)
EH-1: Latent curing agent (EH-1) produced in Production Example 1
EH-2: Latent curing agent (EH-2) produced in Production Example 2
EH-3: Latent curing agent (EH-3) produced in Production Example 3
EH-4: Dicyandiamide
KBM-403: KBM-403 from Shin-Etsu Chemical Co., Ltd. (3-glycidoxypropyl trimethoxysilane)
Ag-1: Flat silver particles having average particle size of 4.8 µm
Ag-2: Spherical silver particles having average particle size of 0.9 µm
Ag-3: Dendritic electrolytic silver powder having average particle size of 1.0 µm
Ag/Cu-1: Flat silver-plated copper powder having average particle size of 6.0 µm

### {Electroconductivity }

Each of the curable resin compositions of the Examples and Comparative Examples was applied onto a glass plate with a bar coater such that the thickness was from 100 to 300 µm. In a circulation thermostatic chamber retained at 150°C, the composition was heated for 30 minutes and cured. The thickness of the obtained cured film was measured, and also, the volume resistivity was measured to evaluate electroconductivity. The volume resistivity (Ω·cm) was calculated using a 4-terminal 4-probe resistivity meter (Loresta GPMPC-T610 from Mitsubishi Chemical Analytech Co., Ltd.).

Cases in which the resistivity was 1.0×10⁻² Ω·cm or lower were rated as A, and cases in which the resistivity was above 1.0×10⁻² Ω·cm were rated as B.

### {Gelation Time}

The temperature of a hot plate was set to 150±2°C, and about 1 g of each of the curable compositions of the Examples and Comparative Examples was placed on this hot plate. While stirring the composition, the time (gelation time) it took until stirring became impossible was measured.

Cases in which the gelation time was less than 10 seconds were rated as A, and cases where the gelation time was 10 seconds or longer were rated as B.

### {SEM Image}

As regards the cured products obtained from the respective curable resin compositions of the Example and Comparative Examples, the cured films on a glass plate were observed with a SEM.

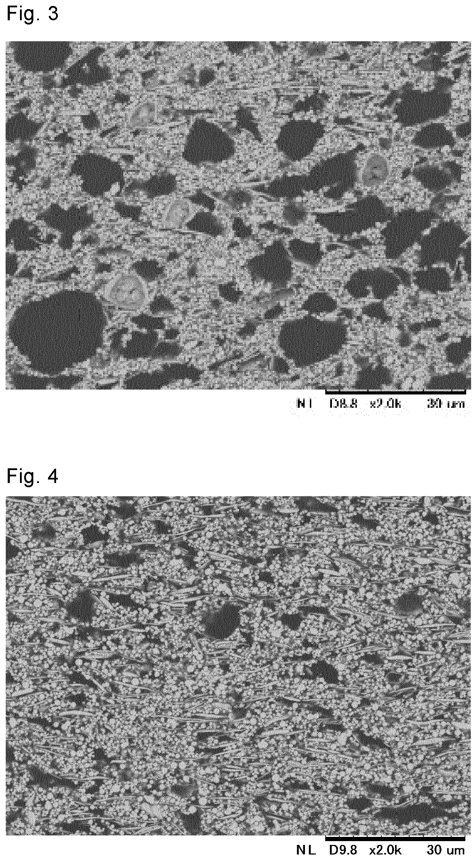

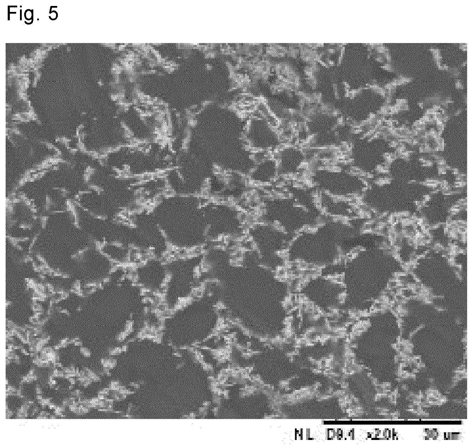

Fig. 1 is an image of a cured product of Example 1 at a magnification of 4000x. Fig. 2 is an image of a cured product of Comparative Example 3 at a magnification of 4000x. Fig. 3 is an image of a cured product of Example 2 at a magnification of 2000x. Fig. 4 is an image of a cured product of Comparative Example 1 at a magnification of 2000x. From comparisons between Figs. 1 and 2, as well as between Figs. 3 and 4, it is thought that, in Examples 1 and 2, localization of silver has occurred and electroconductive paths have been formed, thus resulting in improved electroconductivity. Fig. 5 is an image of a cured product of Example 3 at a magnification of 2000x. As in Examples 1 and 2, localization of silver can be observed.

As shown by the Examples, the curable resin compositions of the present invention are curable resin compositions capable of offering cured products having excellent electroconductivity and curability.

### Industrial Applicability

The present invention can provide a curable resin composition particularly capable of offering a cured product having excellent electroconductivity, and can therefore suitably be employed for electroconductive materials, such as alternative materials to solder.

## Claims

1. A curable resin composition comprising:
(A) a cyanate ester resin;
(B) an epoxy resin;
(C) a latent curing agent including an amine-based latent curing agent having an active hydrogen and obtained by causing reaction between an amine compound and an epoxy compound; and
(D) an electroconductive filler.

2. The curable resin composition according to claim 1, wherein the cyanate ester resin, which is the component (A), is at least one type selected from compounds represented by formula (1) below, compounds represented by formula (2) below, and polymers of at least one type of compound selected from these compounds:
[Chem. 1]
NC-O-A¹-Y¹-A²-O-CN (1)
(in the formula, Y¹ represents a divalent hydrocarbon group which is not substituted or is substituted by a fluorine atom or a cyanato group, or represents -O-, -S-, or a single bond; and A¹ and A² each independently represent a phenylene group which is not substituted or is substituted by 1 to 4 alkyl groups); 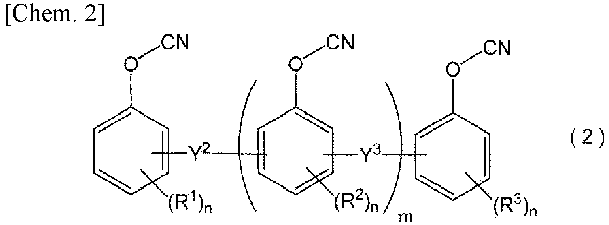 (in the formula, m represents an integer of 1 or greater; Y² and Y³ each independently represent -S- or a divalent hydrocarbon group which is not substituted or is substituted by a fluorine atom or a cyanato group; R¹, R², and R³ each independently represent an alkyl group having 1 to 4 carbon atoms; and n each independently represents an integer from 0 to 2).

3. The curable resin composition according to claim 2, wherein Y¹ in the formula (1) and Y² and Y³ in the formula (2) each independently represent at least one type selected from formulas (Y-1) to (Y-9) below: 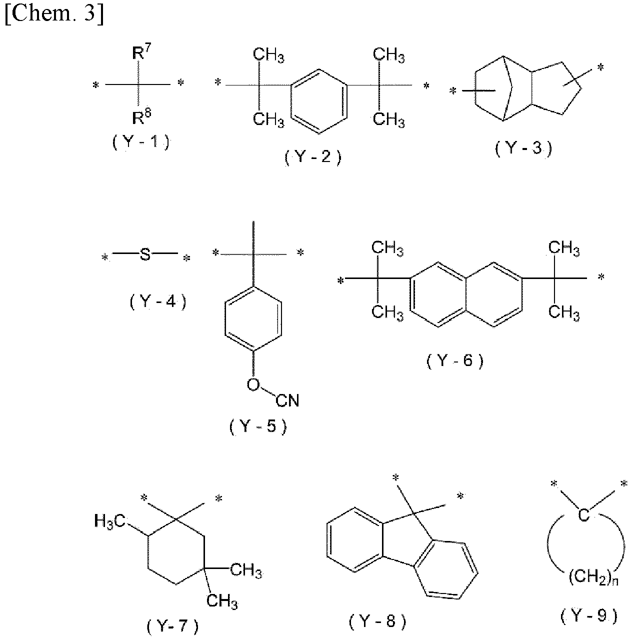 (in the formulas, n represents an integer from 4 to 12; R⁷ and R⁸ each independently represent a hydrogen atom or a methyl group which is not substituted or is substituted by a fluorine atom; and * represents a bonding site).

4. The curable resin composition according to any one of claims 1 to 3, wherein the amine compound in the component (C) is at least one type selected from aliphatic amines and alicyclic amines.

5. The curable resin composition according to any one of claims 1 to 4, wherein the latent curing agent, which is the component (C), further contains a phenolic resin.

6. The curable resin composition according to any one of claims 1 to 5, wherein the electroconductive filler, which is the component (D), is at least one type selected from silver particles and copper particles.

7. The curable resin composition according to any one of claims 1 to 6, wherein the electroconductive filler, which is the component (D), has a particle size of from 0.1 to 50 µm.

8. The curable resin composition according to any one of claims 1 to 7, wherein a content of the electroconductive filler, which is the component (D), is from 30 to 90 mass% in the curable resin composition.

9. A cured product obtained by curing the curable resin composition according to any one of claims 1 to 8.

10. An adhesive comprising the curable resin composition according to any one of claims 1 to 8.
